# EUROPEAN PATENT APPLICATION

(11) **EP 1 383 062 A2**
(43) Date of publication of application: **21.01.2004**
(21) Application number: 03015682.2
(22) Date of filing: 18.07.2003
(51) Int. Cl.: G06F 17/60

(54) **Manufacturing data access**

(30) Priority: 19.07.2002 US 397476 P; 08.10.2002 US 268006
(71) Applicant: SAP AG, 69190 Walldorf (DE)
(72) Inventor: Schmidt, Martin, 69168 Wiesloch (DE); Scheiber, Christoph, Dr., 68799 Reilingen (DE)
(74) Representative: Müller-Boré & Partner Patentanwälte

(57) **Abstract**

Methods and apparatus, including computer program products, implementing and using techniques for exchanging values of datapoints between two or more services representing applications in a manufacturing system. One or more addresses are specified. Each address represents a datapoint that is associated with a service, and each datapoint has a value of a defined data type. One or more variables corresponding to the data types of the one or more datapoints are specified. One or more values are transferred between the one or more datapoints and the one or more variables. The values correspond to the data types of the datapoints.

## Description

### BACKGROUND

The present invention provides methods and apparatus, including computer program products, for linking applications in a manufacturing environment.

Many facets of today's industries are implemented using computer systems in some manner. Computerization enables businesses to remain competitive. A number of businesses have implemented ERP (Enterprise Resource Planning) and other packaged application systems in order to gain a competitive advantage. SAP AG, located in Walldorf, Germany provides solutions for product manufacturers to help them reach their goals. The solutions are based on the mySAP.com e-business platform (see www.sap.com for further information). One such solution is the SAP R/3 System.

Standardization of business processes that facilitate streamlined order management, effective resource planning, agile manufacturing, efficient logistics execution, and the like, has been a priority of enterprises worldwide. Optimization and streamlining of the supply chain, including the manufacturing process, is an ongoing process.

In a manufacturing environment, numerous manufacturing functions are now controlled by computer systems. Such functions can include real-time process control of discrete component manufacturing (such as in the automobile industry) and process manufacturing (such as chemical manufacturing through the use of real-time process control systems). For example, control and automation systems have added flexibility and automation to the production process. Changes can easily be made to a production recipe, operation sequence, routing or even reschedule a production run. Industrial Application vendors (such as Honeywell Inc., Rockwell Inc., and Siemens AG) provide packaged software applications and hardware in the form of PLCs (programmable logic controllers), SCADA (Supervisory Control And Data Acquisition) and PCS (Process Control System) systems to automate and control the plant floor.

### SUMMARY

The invention features a Manufacturing Data Access (MDA) service for facilitating control of data flow between applications, in particular applications in a manufacturing environment. The data flow can include any data associated with a manufacturing enterprise, such as product data, planning data, operational data, resource data and the like. The data flow can include any type of data, including data that contains information about the current state of something, such as an order quantity, the number of days a worker was absent during a work quarter, the date when scheduled maintenance of machine #18 is due, and so on. The data flow can also include information about individual events that occur, such as the company's stock price has risen, the temperature of batch process "Y" has decreased, machine #18 has switched to manual mode, and so on.

In general, in one aspect, this invention provides methods and apparatus, including computer program products, implementing and using techniques for exchanging values of datapoints between two or more services that represent applications in a manufacturing system. One or more addresses are specified. Each address represents a datapoint that is associated with a service, and each datapoint has a value of a defined data type. One or more variables corresponding to the data types of the one or more datapoints are specified. One or more values are transferred between the one or more datapoints and the one or more variables. The values correspond to the data types of the datapoints.

Advantageous implementations can include one or more of the following features. One value can be transferred from one variable to one datapoint. One value can be transferred from one variable to two or more datapoints. One value can be transferred from one datapoint to one variable. One value can be transferred from one datapoint to two or more variables. A name can be specified of the service with which the datapoint is associated. One of a simple value, a structured value, or binary data value can be specified for the datapoint. An event can be defined and a value of a datapoint can be transferred between the datapoint and a variable whenever the defined event occurs. An address of the defined event can be specified, which address includes a name of a service to which the event is connected.

In general, in one aspect, this invention provides methods, apparatus, and systems, including computer program products, implementing and using techniques for exchanging data between two or more program-based services. The program-based services represent applications in a manufacturing system. The data processing system includes one or more client services, one or more server services, and a manufacturing data interface. The client services can send requests to the manufacturing data interface, and receive data from the manufacturing data interface in response to the requests. The server services can receive requests from the manufacturing data interface and supply data to the manufacturing data interface in response to the requests. The manufacturing data interface can receive a request from the one or more client services, examine the request, distribute the request to one or more server services, receive one or more responses from the server services to which the requests were distributed, process the responses, and transmit the processed responses to one or more client services requesting a response.

Advantageous implementations can include one or more of the following features. The manufacturing data interface can include a service dictionary, and the manufacturing data interface can examine a received request against entries in the service dictionary in order to determine to which server services the request is to be distributed. The requests can be in the format of request objects and the responses can be in the format of response objects. The manufacturing data interface can assemble multiple response objects from different server services into a single response object before transmitting the processed responses to the one or more client services requesting the response. The server services can publish data related to a particular event when the particular event occurs. The manufacturing data interface can transmit published data to one or more of the client services whenever data related to a particular event is published.

Advantages that can be seen in implementations of the invention include one or more of the following. ERP applications, including applications in a manufacturing environment can register as a service at the MDA interface component of the MDA service. A service can be used as a client, a server, or both as a client and a server. Clients can request data from other services, while servers provide data for other services. Services that are used both as clients and servers can provide and request data.

A client can read data from other services, write data to other services, and subscribe to events from other services, using a single request. When a service subscribes to events from another service, the events can be automatically reported to the subscribing service when they occur. Events can contain associated data that can be read while the events are processed. For example, a client can receive notification that the pressure of tank A has risen (i.e., an event has occurred) and the current pressure of tank A (i.e. data associated with the event) can be provided to the client. A server provides datapoints that can be read from or written to by other services and provides events to which other services can subscribe. Once events occur, the events can be published by the server. Data can be read or written synchronously (i.e., by a user request, for example, by the user pressing a button). Data can also be read or written asynchronously (i.e., on an event-driven basis).

The details of one or more embodiments of the invention are set forth in the accompanying drawings and the description below. Other features of the invention will be apparent from the description and drawings, and from the claims.

### DESCRIPTION OF DRAWINGS

FIG. 1 is a schematic diagram showing a MDA service with a MDA interface linking a client and a server.
FIG. 2 is a screenshot of an overview screen for creating an automatic process message.
FIG. 3 is a flowchart of a process for reading a value from a datapoint through a MDA interface.
FIG. 4 illustrates components of a Production Planning for Process Industries (PP-PI) environment, including the MDA interface.

Like reference symbols in the various drawings indicate like elements.

### DETAILED DESCRIPTION

The MDA service will be described by way of example, with reference to SAP-specific applications and implementations. However, it should be clear that the MDA service can be implemented in any client-server environment that allows identification and registration of services and retrieval of datapoints from the services. The following terminology will be used throughout the specification:
*Datapoint -* A datapoint is a logical node that can be accessed through a globally unique address. The node can be read from or written to and represents a simple value (e.g. a date or time), a structured value (e.g. a network address or markup documents such as an XML document), or binary data.
*Event -* An event is a globally uniquely addressable node, to which node's address a registration that results in asynchronous callbacks can be made.
*MDA Server* -A MDA server defines datapoints and events. The MDA server can process read or write requests of values, as well as handle registration and de-registration of events, and publish new events, including, for example, value changes. Answers to requests are generated and can be sent synchronously or asynchronously.
*MDA Client - A* MDA client does not define any datapoints or events. However, a MDA client can read from or write to datapoints that can be accessed at one or more MDA servers, and a MDA client can initiate callbacks. The access to the datapoints can be synchronous or asynchronous.
*Service -* An application-specific service that specifies supplies specific client and server instances. Each application-specific service can support clients, servers, or both.
*MDA Request - A* request object that assembles requests at the server. The request object is created for a particular application, and can be processed by various servers, if necessary.
*MDA Response -* A server can react to a request over a MDA response object. A MDA response object is created for server data and is sent to the MDA client, which is registered when the request is created.
*MDA Event -* If an event occurs, then the server uses a MDA event object to transmit event names, messages, and parameters to the MDA.

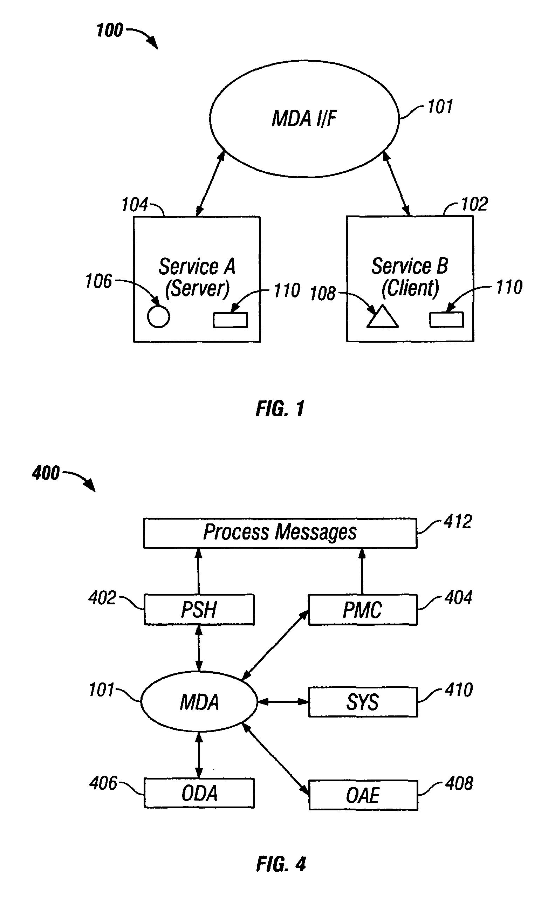

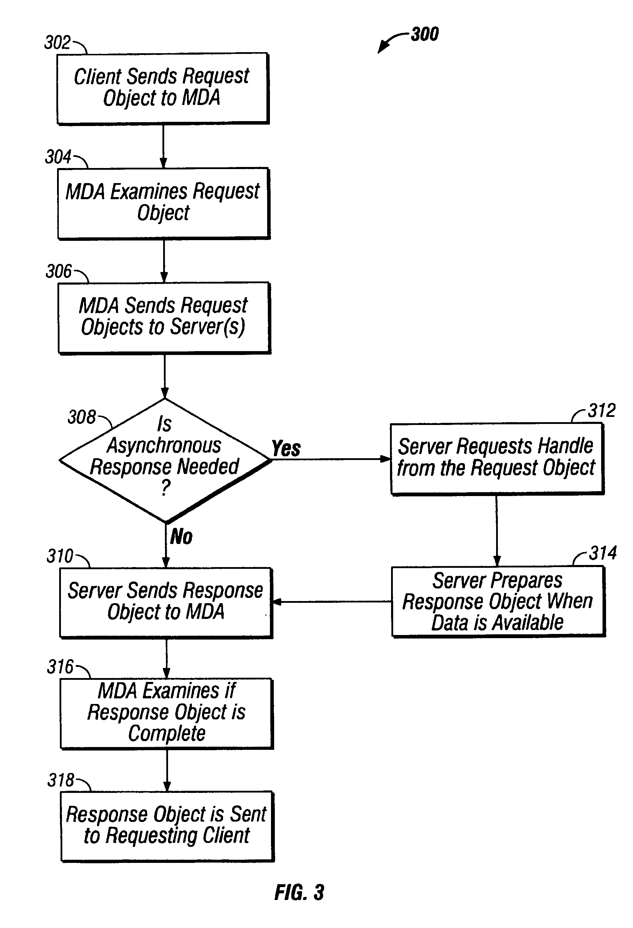

FIG. 1 shows schematically a MDA service (100). ERP applications, including applications in a manufacturing environment system can register as services at a MDA interface (101). Registration of applications as services at the MDA interface (101) is described in greater detail below. Each service represents a concrete use, and each service supports a preset, standard interface. Examples of services include:
   *Order management, order planning --* services supporting functions such as sales and distribution, materials management, financial accounting, and production planning.
   *Batch management --* service provided for the management and processing of one or more production units (a batch) using defined specifications in all areas of logistics. For example, a batch can be followed through an entire manufacturing process from the batch's entry into the manufacturing process through purchasing to when the batch leaves a plant through sales.
   *Quality Management (QM), inspection lots --* services related to quality inspection processes and in-process control during production.
   *Process instruction sheet (PI sheet* /*PSH) --* a service designed to support manual and semiautomatic processes in the process manufacturing area. For example, from the PI sheet, a process operator can read values from or write values to any shop floor automation system. The PSH service supports display of control information in natural language, recording of process data, calculation of values, reporting entered and calculated values using process messages, recording inspection results by jumping directly to QM, and calling function modules to access, for example, order confirmation, document management, material quantity calculation, and so on.
   *Process manufacturing cockpit (PMC) --* the application behind the PMC service supports a presentation platform for decision support. The progress made in implementing a strategy and in what areas more effort is required can be ascertained at a glance.
   *Process control systems (PCS) --* the PCS service provides a solution for process manufacturers to unite SAP R/3 business and process manufacturing software with the real-time world of process control. The PCS service is a standard, open interface that is based on OPC (OLE for Process Control) and that enables direct integration of the SAP R/3 System with complementary process control systems, and SCADA systems.
   *Electronic batch record, process data evaluation --* electronic batch record and process data evaluation services provide functions for the evaluation of process data. For example, during process data documentation, lists of order-related and batch-related process data can be generated and stored in an optical archive, which enables the creation and storing of an electronic batch record (EBR) that cannot be manipulated.
   *Alert management --* the alert management service provides support for the definition and customization of alerts within a manufacturing process.
   *Supply chain event manager --* the supply chain event manager service provides functions for the management of processes, inventories, assets and business partners across a supply chain using a set of predefined events.
   *Plant maintenance, resource log --* the plant maintenance service and resource log provide support for the inspection, preventative maintenance, and repair of technical systems.
   *Customer-specific services --* services other than services provided by the SAP R/3 System.

In the MDA service (100) in FIG. 1, the MDA interface (101) communicates with two services, A and B. Service A is a server (104) and service B is a client (102). The MDA interface (101) acts as a broker between the client (102) and the server (104). As was described above, the client (102) can request data from various services, while the server (104) provides data to other services in response to requests, or on an event driven basis. Services that are used both as clients and servers can both provide and request data.

When the client (102) has a request for data, the client sends the request to the MDA interface (101), which forwards the request to and obtains data from one or many different servers (104). The data from the one or more servers is received at the MDA interface (101), and can be forwarded to the requesting client only, or to the requesting client and to other clients as well, depending on the MDA service setup. The servers (104) thus receive requests from the MDA interface (101), without knowing the identity of the requesting clients, and supply data to the MDA interface (101) in response to the received requests. It should be noted that although FIG. 1 shows only one server and only one client, multiple clients and multiple servers can communicate through the MDA interface (101) of the MDA service (100).

In order for applications to use the MDA service (100), the applications register at the MDA interface (101). In one implementation, the MDA service (100) supports a service directory based on UDDI (Universal Description Discovery Integration - see http://www.uddi.org for more information), in which applications can be registered. An application can be registered as a service in the service directory, and can function as a client (102), a server (104), or both as a client and a server. Each service that is registered in the service directory has a unique address. The information in the service directory can be searched by clients, and when a service has been located, the client can send a request to the MDA interface (101) using a Simple Object Access Protocol (SOAP). The MDA interface (101) thus allows for the decoupling of a service that provides data (that is, a server) from services that are consumers of the data (that is, the clients). In addition to receiving requests from clients (102), the MDA interface (101) can also receive published data from servers (104), in which case the MDA interface (101) routes the published data to target clients (102). The MDA interface (101) operates in a Request/Response and Publish/Subscribe environment to provide access to data between the registered services.

The server (104) can include a number of server objects (106), which provide data and events (that is, that allow read and write access to datapoints, and that support event subscription). The client (102) can include a number of client objects (108) that access server objects (106). A service that functions both as a client and a server can have a number of client objects and server objects. The client objects (108) can access the server objects (106) synchronously (for example, in response to a request) or asynchronously (for example, on an event-driven basis). Each MDA service can also provide an assistant object (110) that supports dynamic address validation and retrieval.

In one implementation, an address of a datapoint associated with a service is represented as a string of characters. Each address begins with the name of the service to which the datapoint belongs: "Service":<node>.<node>.<node>...<node>. The other parts of the address, that is, the nodes, can include the name of a datapoint (for example, a global variable that is not only local to a particular application, but that can be accessed by other applications as well). Alternatively the other parts of the address can be determined based on the service. The address provides a mechanism for accessing a datapoint, or more particularly for accessing a value of a datapoint. Some examples of addresses can be seen in table 1 below.

**Table 1**

| Address | Explanation |
|---|---|
| PSH: 1974.MYVAR | Service PSH, PI sheet 1974, value of variable MYVAR |
| PMC:0001.MYCOCKPIT.MYVAR | Service PMC, plant 0001, cockpit MYCOCKPIT, value of variable MYVAR |
| SYS:TIME.UTC | Service System, current time (Universal Coordinated Time) |

When an application is registered as a service at the MDA interface (101), assistant objects, client objects and/or server objects are defined for the registered service. In one SAP-specific implementation, the Business-Add-In (BAdI) interface SCM_CMX_DA_SRV can be used to register any applications of the SAP R/3 System as services. Once a service is registered, the service implementation (i.e., the BAdI implementation) is connected to a service name. In the SAP-specific implementation, the service name works as a filter value of the BAdI. Once a BAdI implementation of the service has been registered, the service can be addressed by other MDA clients. Through the BAdI implementation, the MDA interface (101) can access the client objects and server objects, as well as the assistant objects, of the service.

The MDA interface (101) contains two generic services, BROADCAST and REDIRECT. The BROADCAST service can be used to define user-specific events. A generic datapoint is provided to which a user can write any value. The value change of the datapoint is published as an event. Other services can subscribe to this event through the MDA interface (101). The address for event propagation can include the name of the service, for example, MDA:BROADCAST.SEND.<Category>, where <Category> can be replaced by any character string representing the user-specific value. Other services can subscribe to this event based on an addressing scheme, such as MDA:BROADCAST.<Category>.

Parameter values can also be defined and transferred as datapoints together with the event. Examples of defined parameters can be seen in table 2 below.

**Table 2**

| Parameter | Definition |
|---|---|
| MDA:BROADCAST.PARAM.CATEGORY | Category of the event |
| MDA:BROADCAST.PARAM.SESSION | The system logon from which the event was sent |
| MDA:BROADCAST.PARAM.TERMINAL | The terminal from which the event was sent |
| MDA:BROADCAST.PARAM.TIMESTAMP | The time stamp at which the event was sent |
| MDA:BROADCAST.PARAM.USER | The user who sent the event |
| MDA:BROADCAST.PARAM.VALUE | The value of the datapoint that is transferred with the event |

For example, BROADCAST can be used in the following exemplary manufacturing scenario. The fill level of tank #333 is to be recorded in a manufacturing cockpit. The up-to-date fill level is to be published as an event by pressing a button. In the cockpit definition, the characteristics listed in table 3 below can be specified.

**Table 3**

| Characteristic | Characteristic Value |
|---|---|
| PPPI_DATA_REQUEST_TYPE | Simple data request |
| PPPI_DATA_POINT_NAME | Tank #333 |
| PPPI_OUTPUT_CHARACTERISTIC | PPPI_DATA_POINT_NAME |
| PPPI_INPUT_REQUEST | Record fill level |
| PPPI_VARIABLE | VAR_DPV |
| PPPI_REQUESTED VALUE | PPPI_DATA_POINT_VALUE |
| PPPI_DATA_ACCESS | Manufacturing Data Access |
| PPPI_BUTTON_TEXT | Publish |
| PPPI_FUNCTION_DURING_DISPLAY | Permitted |
| PPPI_EXPORT_DATA | MDA:BROADCAST.SEND.DPV |
| PPPI_FLOAT_VARIABLE | VAR_DPV |

In the above example, in the address MDA:BROADCAST.SEND.<Category>, <Category> was replaced by *DPV* meaning *datapoint value.*

The generic service REDIRECT makes it possible to give an address dynamically to any number of datapoints. Values can then be read from, or written to, the newly addressed datapoints. Two generic datapoints are available for this service. One of the generic datapoints is used to transfer an address, and the other is used to transfer a value. A dynamically selected address can be transferred to the generic datapoint by MDA:REDIRECT.ADDRESS.<Index>, where <Index> can be replaced by any character string. The value of the datapoint addressed dynamically can be read or written using the generic datapoint MDA:REDIRECT.VALUE.<Index>, where <Index> is replaced with the same value that is used in addressing the generic datapoint. Any number of pairs of dynamically selected addresses and values can be created in one call.

When data is transferred between two services, through the MDA interface (101), it typically involves transferring a value between a datapoint and a corresponding variable. The corresponding variable has the same data type as the datapoint. The corresponding variable can be a local variable (i.e., a variable that is defined within a single service), or a global variable (i.e. a variable that has been made available as a datapoint by a service). During a read operation, a value of a datapoint is transferred to a corresponding variable.

Data can be read or written synchronously (i.e., when a user gives instructions to read or write data), or asynchronously (i.e. whenever a pre-defined event occurs). Table 4 below shows the characteristics involved when a value of a datapoint is read. Table 5 shows the characteristics involved when a value is written to a datapoint. Table 6 shows the characteristics involved when a value of a datapoint is read on an event-driven basis. Table 7 shows the characteristics involved when a value of a datapoint is written on an event-driven basis.

**Table 4**

| Characteristic | Explanation | Example value |
|---|---|---|
| PPPI_DATA_ACCESS | Manufacturing Data Access | MDA |
| PPPI_IMPORT_DATA | Datapoint from which the value is to be transferred to a corresponding variable | ODA:ITEM_1.VALUE |
| PPPI_STRING_VARIABLE | Names of corresponding variables | MYVAR3 |

**Table 5**

| Characteristic | Explanation | Example value |
|---|---|---|
| PPPI_DATA_ACCESS | Manufacturing Data Access | MDA |
| PPPI_EXPORT_DATA | Datapoint to which the value of the corresponding variable is to be transferred | ODA:ITEM_1.VALUE |
| PPPI_STRING_VARIABLE | Names of corresponding variables | MYVAR3 |

**Table 6**

| Characteristic | Explanation | Example value |
|---|---|---|
| PPPI_DATA_ACCESS | Manufacturing Data Access | MDA |
| PPPI EVENT | Internal or external event | ODA:ITEM_1.CHANGE |
| PPPI_IMPORT_DATA | Datapoint from which the value is to be transferred to the corresponding variable | ODA:ITEM_1.VALUE |
| PPPI_STRING_VARIABLE | Names of corresponding variables | MYVAR3 |

**Table 7**

| Characteristic | Explanation | Example value |
|---|---|---|
| PPPI_DATA_ACCESS | Manufacturing Data Access | MDA |
| PPPI_EVENT | Internal or external event | ODA:ITEM_1.CHANGE |
| PPPI_EXPORT_DATA | Datapoint to which the value of the corresponding variable is to be transferred | ODA:ITEM_1.VALUE |
| PPPI_STRING_VARIABLE | Name of corresponding variable | MYVAR3 |

Using the characteristics described in tables 4-7 above, various operations can be carried out. For example, Table 8 below shows how a single value (of variable VAR1) can be written to multiple items (ODA items 1, 2 and 3).

**Table 8**

| | |
|---|---|
| PPPI_DATA_ACCESS | MDA |
| PPPI_BUTTON_TEXT | Transfer data |
| PPPI_FUNCTION_DURING_DISPLAY | In progress |
| PPPI_EXPORT_DATA | ODA:ITEM_1 .VALUE |
| PPPI_EXPORT_DATA | ODA:ITEM_2.VALUE |
| PPPI_EXPORT_DATA | ODA:ITEM_3.VALUE |
| PPPI_FLOAT_VARIABLE | VAR1 |

Table 9 below shows how several values (of variables MYVAR1 and MYVAR2 and a constant 100) can be written to multiple items (ODA items 1, 2 and 3).

**Table 9**

| | |
|---|---|
| PPPI_DATA_ACCESS | MDA |
| PPPI_BUTTON_TEXT | Transfer data |
| PPPI_FUNCTION_DURING_DISPLAY | In progress |
| PPPI_EXPORT_DATA | ODA:ITEM_1.VALUE |
| PPPI_FLOAT_VARIABLE | MYVAR1 |
| PPPI_EXPORT_DATA | ODA:ITEM_2.VALUE |
| PPPI_DATE_VARIABLE | MYVAR2 |
| PPPI_EXPORT_DATA | ODA:ITEM_3. VALUE |
| PPPI_STRING_CONSTANT | 100 |

Table 10 below shows how several values (of variables MYVAR1, MYVAR2, and MYVAR3) can be read from multiple items (ODA items 1, 2 and 3).

**Table 10**

| | |
|---|---|
| PPPI_DATA_ACCESS | MDA |
| PPPI_BUTTON_TEXT | Transfer data |
| PPPI_FUNCTION_DURING_DISPLAY | In progress |
| PPPI IMPORT DATA | ODA:ITEM_1.VALUE |
| PPPI_FLOAT_VARIABLE | MYVAR1 |
| PPPI_IMPORT_DATA | ODA:ITEM_2.VALUE |
| PPPI_DATE_VARIABLE | MYVAR2 |
| PPPI_IMPORT_DATA | ODA:ITEM_3.VALUE |
| PPPI_STRING_VARIABLE | MYVAR3 |

Table 11 below shows how several variables (MYVAR1, MYVAR2, and MYVAR3) can be read from a single item (ODA item 1).

**Table 11**

| | |
|---|---|
| PPPI_DATA_ACCESS | MDA |
| PPPI_BUTTON_TEXT | Transfer data |
| PPPI_FUNCTION_DURING_DISPLAY | In progress |
| PPPI_IMPORT_DATA | ODA:ITEM_1 VALUE |
| PPPI_FLOAT_VARIABLE | MYVAR1 |
| PPPI_DATE_VARIABLE | MYVAR2 |
| PPPI_STRING_VARIABLE | MYVAR3 |

Table 12 below shows how several values (of variables MYVAR1, MYVAR2, and MYVAR3) can be read automatically from one item (ODA item 1).

**Table 12**

| | |
|---|---|
| PPPI_DATA_ACCESS | MDA |
| PPPI_BUTTON_TEXT | Transfer data |
| PPPI_FUNCTION_DURING_DISPLAY | In progress |
| PPPI_EVENT | ODA:ITEM_1.CHANGE |
| PPPI_IMPORT_DATA | ODA:ITEM_1.VALUE |
| PPPI_FLOAT_VARIABLE | MYVAR1 |
| PPPI_DATE_VARIABLE | MYVAR2 |
| PPPI_STRING_VARIABLE | MYVAR3 |

When handling requests, all servers respond to the request in the same manner, even if internal handling of the requests leads to different actions. Likewise, when handling an event, different clients subscribe to the event in the same manner. Based on addresses, any service implementation can (dynamically) be replaced by another service implementation without invalidating any client's logic. A client that sends out a request is not aware of the addressed server objects. From the client's point of view, the client only communicates with the MDA interface (101) to which it sends a request that leads to a response. The client is unaware of how, or by which service the client's request is handled.

The MDA service (100) can also be used to provide values of datapoints to process messages. A process message can supply information on the status of process orders, consumption and production of materials, and status of resources. Process messages can be can be automatically created at certain time intervals or whenever an event occurs. FIG.. 2 shows a screenshot of a user interface through which conditions for creating an automatic process message can be entered. A variant is created for every process message. The following start conditions may be selected:
- *Start not Allowed* -- The variant must not be started.
- *Manual Individual Start* -- The variant can be started manually on the overview screen. The process message is created only once.
- *Periodic Start* -- With this condition, the user can enter time intervals at which the variant is to be started automatically. The process messages are then automatically created in the time intervals specified.
- *Event-Driven Start* -- With this condition, the user can specify a manufacturing event that is to trigger message creation. Events can be provided through services registered at the MDA interface (101).

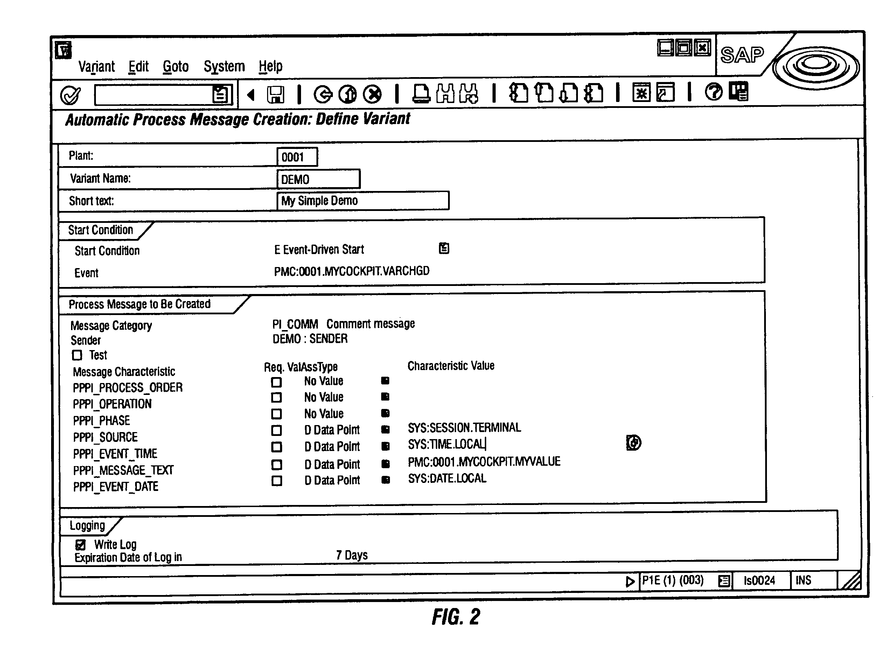

As shown in FIG. 2, an Event-Driven Start condition is specified for the variant. The address of the event which triggers process message creation is PMC:0001.MYCOCKPIT.VARCHD (i.e., service PMC, plant 0001, cockpit MYCOCKPIT, value changes to global variables occurred).

FIG. 3 shows a process (300) for reading a value of a datapoint in a service. The process starts with a client (102) sending a request object to the MDA interface (101) (step 302). The request object contains a request for information, typically relating to a datapoint in a service, as well as the identity of the requesting client, so that the MDA interface (101) has the necessary information about where to send the response once it has been obtained. The MDA examines the request object (step 304) to determine if the request is related to more than one server, and to determine the addresses of the server to which the requests should be sent. If the addresses are included in the request object, then they are interpreted and used by the MDA interface to forward the request object to the servers (step 306). If the addresses are not included in the request object, the MDA looks up the appropriate servers in the service directory and sends the request objects to the servers that match the request.

At each server that receives the request object, the request object is examined to determine whether or not an asynchronous response is needed (step 308), that is, if the request can be answered immediately, or if a particular event has to occur before the request is answered. Each server can only respond to requests, or parts of requests, for which it has the relevant information. If an asynchronous response is needed, that is, an event has to occur before the server can respond, the server requests a handle from the request object (step 312). This handle is later used for figuring out where to send the response when the event occurs (step 314).

When the event has occurred, or if no asynchronous response was needed, the server sends a response object containing the response to the MDA interface (step 310). The MDA interface examines if the response is complete (step 316). A response can be incomplete, for example, if the request was sent to multiple servers and only a few of the servers have responded at a given point in time. When the response is complete, or if the request was only sent to a single service, the response object is forwarded to the requesting client (step 318). If the response object consists of several parts, these parts are first put together to a single response object before the response object is forwarded to the requesting client. In addition, if the response is to be sent to other systems as well, the response object is converted into a markup language format, such as XML, before it is sent on to the other systems.

FIG. 4 shows an exemplary MDA service setup for a PP-PI (Production Planning for Process Industries) environment (400), including the MDA interface (101). The PP-PI environment is primarily designed to support the planning and execution of batch-oriented process manufacturing. The arrows represent possible communication channels. In the system shown in FIG. 4, the following services communicate with the MDA interface (101): Process Instruction Sheet (PSH) (402), Process Manufacturing Cockpit (PMC) (404), OPC Data Access (ODA) (406), OPC Alarm/Events (OAE) (408), and System Information (SYS) (410). The process message (412) is also shown as a component of the PP-PI environment (400).

PI sheets and manufacturing cockpits are registered at the MDA interface (101) as Service PSH (402) and Service PMC (404), respectively. Services PSH (402) and Service PMC (404) serve both as clients and servers. The client can read and write values of datapoints from the services PSH (402), PMC (404), ODA (406), and SYS (410). The client can read and subscribe to events from the services MDA (100), PSH (402), PMC (404), ODA (406), and OAE (408). These events can be used to subscribe to value changes.

Table 13 below shows a list of different event types of service PSH (402) to which other services can subscribe:

**Table 13**

| Event | Address |
|---|---|
| PI sheet was completed | PSH:<No. of PI sheet>.COMPLTD |
| PI sheet was created | PSH:<No. of PI sheet>.CREATED |
| Maintenance was started | PSH:<No. of PI sheet>.LOGIN |
| Maintenance was exited | PSH:<No. of PI sheet>.LOGOFF |
| Data was reported | PSH:<No. of PI sheet>.REPORTD |
| Data was saved | PSH:<No. of PI sheet>.SAVED |
| Global variables were changed | PSH:<No. of PI sheet>.VARCHGD |

Table 14 below shows a list of events of service PMC (404) to which other services can subscribe:

**Table 14**

| Event | Address |
|---|---|
| Manufacturing cockpit was started | PMC:<Plant>.<Cockpit name>.LOGIN |
| Manufacturing cockpit was exited | PMC:<Plant>.<Cockpit name>.LOGOFF |
| Global variables were changed | PMC:<Plant>.<Cockpit name>.VARCHGD |

Table 15 below shows the global variables in PMC (404) and PSH (402) that other services can access as datapoints:

**Table 15**

| Variable | Address |
|---|---|
| Datapoint of Service PSH | PSH:<No. of PI sheet>.<Global variable> |
| Datapoint of Service PMC | PMC:<Plant>.<Cockpit name>.<Global variable> |

Services ODA (406) and OAE (408) are registered at the MDA interface (101) as servers only. OPC items in service ODA (406) that can be read by other services can be seen below in table 16.

**Table 16**

| Item | Address |
|---|---|
| Current value | ODA:<Plant>.<OPC item>.PV |
| Date | ODA:<Plant>.<OPC item>.DT |
| Time | ODA:<Plant>.<OPC item>.TM |
| Quality of item value | ODA:<Plant>.<OPC item>.QL |
| Substatus of quality | ODA:<Plant>.<OPC item>.QS |
| Quantity limit | ODA:<Plant>.<OPC item>.QL |
| Result text | ODA:<Plant>.<OPC item>.RT |

In the system shown in FIG. 4, value changes of the OPC items to which other services can subscribe as events are accessed through the address: ODA:<Plant>.<OPC item>.VCH.OPC events to which other services can subscribe are accessed through the address OAE:<Plant>.<OPC subscription>. The service system (SYS) (410) is a server. The service SYS provides the datapoints listed in table 17 below, which contain system information.

**Table 17**

| Information | Datapoint |
|---|---|
| Date according to local settings by the user | SYS:DATE.LOCAL |
| Date, Universal Coordinated Time (UTC) | SYS:DATE.UTC |
| Time according to local settings by the user | SYS:TIME.LOCAL |
| Time, Universal Coordinated Time (UTC) | SYS:TIME.UTC |
| Time stamp, long format | SYS:TIMESTAMP.LONG |
| Time stamp, short format | SYS:TIMESTAMP.SHORT |
| Logon language | SYS:SESSION.LANGUAGE |
| Name of terminal | SYS:SESSION.TERMINAL |
| User logged on | SYS:SESSION.USER.NAME |
| User parameters | SYS:SESSION.USER.PARAM.<Parameter name> |
| ABAP (Advanced Business Application Programming) text symbol, language selected, or logon language | SYS:TEXT.SYMBOL.<Program>.<ID>.<Language> |
| ABAP message text in logon language | SYS:TEXT.MESSAGE.<Message class>.<Message number>.<Variable text> |
| Globally unique key, 16 characters, binary | SYS:GUID.BIN16 |
| Globally unique key, 22 characters, text type | SYS:GUID.CHAR22 |
| Globally unique key, 32 characters, text type | SYS :GUID.CHAR32 |

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of nonvolatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

A number of embodiments of the invention have been described. Nevertheless, it will be understood that various modifications may be made without departing from the spirit and scope of the invention. For example, the MDA service has been described, by way of example, in the context of an SAP System. The MDA service can be implemented in other systems as well. Also, multiple MDA interfaces can be implemented within a system. For example, a MDA interface can communicate with one or more other MDA interfaces, so that a client can subscribe to one MDA interface and receive data that was initially published to another MDA interface. Accordingly, other embodiments are within the scope of the following claims.

## Claims

1. A computer program product for exchanging values of datapoints between two or more services, the services representing applications in a manufacturing system, the product being tangibly embodied on a computer-readable medium and comprising instructions operable to:
specify one or more addresses, each address representing a datapoint that is associated with a service, each datapoint having a value of a defined data type;
specify one or more variables corresponding to the data types of the one or more datapoints; and
transfer one or more values between the one or more datapoints and the one or more variables, the values corresponding to the data types of the datapoints.

2. The computer program product of claim 1, wherein the instructions to transfer one or more values include instructions to:
transfer one value from one variable to one datapoint.

3. The computer program product of claim 1, wherein the instructions to transfer one or more values include instructions to:
transfer one value from one variable to two or more datapoints.

4. The computer program product of claim 1, wherein the instructions to transfer one or more values include instructions to:
transfer one value from one datapoint to one variable.

5. The computer program product of claim 1, wherein the instructions to transfer one or more values include instructions to:
transfer one value from one datapoint to two or more variables.

6. The computer program product of one of the preceding claims 1-5, wherein the instructions to specify one or more addresses include instructions to:
specify a name of the service with which the datapoint is associated.

7. The computer program product of one of the preceding claims 1-6, wherein the instructions to specify one or more addresses include instructions to:
specifying one of a simple value, a structured value, or binary data value for the datapoint.

8. The computer program product of one of the preceding claims 1-7, further comprising instructions to:
define an event; and
wherein the instructions to transfer one or more values include instructions to transfer a value of a datapoint between the datapoint and a variable whenever the defined event occurs.

9. The computer program product of claim 8, wherein the instructions to define an event include instructions to specify an address of the defined event, the address including a name of a service to which the event is connected.

10. A data processing system for exchanging data between two or more program-based services, the program-based services representing applications in a manufacturing system, the data processing system comprising:
one or more client services, operable to send requests to a manufacturing data interface, and receive data from the manufacturing data interface in response to the requests;
one or more server services, operable to receive requests from the manufacturing data interface and supply data to the manufacturing data interface in response to the requests;
a manufacturing data interface, operable to:
receive a request from the one or more client services;
examine the request;
distribute the request to one or more server services;
receive one or more responses from the server services to which the requests were distributed;
process the responses; and
transmit the processed responses to one or more client services requesting a response.

11. The data processing system of claim 10, wherein the manufacturing data interface includes a service dictionary, and the manufacturing data interface is operable to:
examine a received request against entries in the service dictionary in order to determine to which server services the request is to be distributed.

12. The data processing system of one of the preceding claims 10-11, wherein the requests are in the format of request objects and the responses are in the format of response objects.

13. The data processing system of one of the preceding claims 10-12, wherein the manufacturing data interface is operable to assemble multiple response objects from different server services into a single response object before transmitting the processed responses to the one or more client services requesting the response.

14. The data processing system of one of the preceding claims 10-13, wherein the server services are further operable to publish data related to a particular event when the particular event occurs.

15. The data processing system of one of the preceding claims 10-14, wherein the manufacturing data interface is further operable to transmit published data to one or more of the client services whenever data related to a particular event is published.

16. A computer-implemented method for exchanging values of datapoints between two or more registered services at an interface, the registered services representing applications in a manufacturing enterprise system, the method comprising:
receiving a request from the one or more client services;
examining the request;
distributing the request to one or more server services;
receiving one or more responses from the server services to which the requests were distributed;
processing the responses; and
transmitting the processed responses to one or more client services requesting a response.
